Europäisches Patentamt

European Patent Office

Office européen des brevets

(11) Publication number: **0 189 180 B1**

# EUROPEAN PATENT SPECIFICATION

(45) Date of publication of patent specification: **08.12.93** (51) Int. Cl.⁵: **A61B 8/06**

(21) Application number: **86100789.6**

(22) Date of filing: **22.01.86**

The file contains technical information submitted after the application was filed and not included in this specification

(54) **Ultrasonic bloodstream diagnostic apparatus with dual displays of velocity profiles and average flow velocity.**

(30) Priority: **23.01.85 JP 10056/85**

(43) Date of publication of application:
**30.07.86 Bulletin 86/31**

(45) Publication of the grant of the patent:
**08.12.93 Bulletin 93/49**

(84) Designated Contracting States:
**DE FR GB**

(56) References cited:
EP-A- 0 014 793          EP-A- 0 036 366
EP-A- 0 100 094          EP-A- 0 129 439
US-A- 4 265 126          US-A- 4 305 063
US-A- 4 370 985

Encyclopedia of Computer Science, Van Nostrand Reinhold Company, 1978, pages 91-97

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **Hayakawa, Yoshihiro**
**5-10-20-206, Sagamioono**
**Sagamihara-shi Kanagawa-ken(JP)**
Inventor: **Nakamura, Yasuhiro**
**2-40-30-305, Shimouma**
**Setagaya-ku Tokyo(JP)**
Inventor: **Kawabuchi, Masami**
**2710-157, Miho-cho**
**Midori-ku Yokohama(JP)**

(74) Representative: **Tiedtke, Harro, Dipl.-Ing. et al**
**Patentanwaltsbüro**
**Tiedtke-Bühling-Kinne & Partner**
**Bavariaring 4**
**D-80336 München (DE)**

# Description

## BACKGROUND OF THE INVENTION

The present invention relates to a circuit for processing ultrasonic information for providing a simultaneous display of velocity profiles and a display of an average blood flow velocity with great accuracy, and more praticularly to an ultrasonic bloodstream diagnostic apparatus using this circuit for providing a display of velocity profiles as a function of time.

Ultrasonic Doppler shift imaging techniques have found extensive use in medical applications where it is desired to obtain the spectrum of bloodstream in a B-scan mode on a real time basis. In order to provide dual displays of velocity profiles and average flow velocity, an ultrasonic diagnostic apparatus comprises a quadrature phase detector which detects phase quadrature Doppler shifted signals. Those signals are digitized and fed to a digital frequency analyzer to obtain real and imaginary components of frequency spectrum. In order to determine the direction of the blood flow the frequency spectrum data is passed through a squaring circuit and a summing amplifier to obtain power spectrum data. The power spectrum data is then fed to a logarithmic processor to reduce the number of data bits representing the power spectrum to adapt the data to the dynamic range of B-scan monitor with respect to the size and cost of a scan converter and a digital-to-analog converter which are provided to process the power spectrum data into a form which is suitable for displaying. Recently developed techniques employ microprocessors for deriving an average frequency of the power spectrum from the compressed power spectrum data for displaying an average flow velocity of bloodstream simultaneously with velocity profiles. However, the logarithmic compression of data bits results in an average frequency value which is inaccurate due to the nonlinearity of the logarithm.

From document US 4,305,063 the use of an automatic digital gain ranging system is known wherein read-in data are converted into a standard format which represents a certain range and the corresponding data in a 10-bit wide word.

Furthermore, from pages 91 to 97 of the Encyclopedia of Computer Science, Van Nostrand Reinhold Company, 1978, some difficulties in connection with calculations by means of computers and the number systems used therefore as well as the conversion of the same are known. In this document different methods of calculation in case of fixed point numbers and floating point numbers are presented and explained in an exemplary manner.

## SUMMARY OF THE INVENTION

It is an object of the present invention to provide an ultrasonic bloodstream diagnostic apparatus and/or a circuit for processing ultrasonic information in such a way that an accurate measurement of average flow velocity can be achieved in an easy and fast way.

This object can be achieved by a circuit for processing ultrasonic information carrying Doppler frequency shifts which indicate the flow velocity of bloodstream, comprising: a frequency analyzer for analyzing the frequencies of said received information, a power spectrum deriving means for deriving from the output of said frequency analyzer N-bit data representing the power spectrum of said Doppler frequency shifts, and an averaging means for deriving a signal representing the average frequency of said power spectrum, wherein said power spectrum deriving means derives said N-bit data by eliminating H higher bits and J lower bits from the output of said frequency analyzer, said N-Bit data are applied in parallel to a memory means comprised in a data compression means as address data, said data compression means converts said N-bit data to (M + L)-bit output data having M output bits and L output bits, wherein said M output bits respectively correspond to those of M bits in said N-bit data which are preceded by a series of K binary 0's, said M output bits having a binary 1 in the most significant bit position thereof, said L output bits represent the least significant bit position of said M output bits with respect to the least significant bit position of said N-bit data, K ranging from zero to N-M and (M + L) being smaller than N, a means for detecting a binary 1 in a predetermined one of said H higher bits for causing said memory means to generate (M + L)-bit data of maximum value, said averaging means derives said signal representing the average frequency of said power spectrum from said (M + L)-bit output data, and a data conversion means converts said (M + L)-bit output data into significant data to be displayed.

Furthermore, this object can be achieved by an ultrasonic bloodstream diagnostic apparatus comprising: an ultrasonic probe for examining a patient's blood stream, a transmit/receive circuit means for exciting said probe to transmit ultrasonic energy from said probe into the patient body and receiving ultrasonic signals returning from tissues of said patient, a quadrature phase detector means for deriving phase quadrature signals from said received ultrasonic signals, an analog-to-digital converter means for digitising said phase quadrature signals, a frequency analyzer for analyzing the frequencies of said received information, a power spectrum deriving means for deriving from the output of said frequency analyzer N-bit data representing the power spectrum of said Doppler frequency shifts, and an averaging means for deriving a signal representing the average frequency of said power spectrum, wherein said power spectrum deriving means derives said N-bit data by eliminating H higher bits and J lower bits from the output of said frequency analyzer with a squaring means for squaring the output of said frequency analyzer, the squared value of the analyzer output being represented by N' bits which include said N-bit data plus said insignificant H higher bits in positions higher than said N-bit data and said insignificant L lower bits in positions lower than said N-bit data and with a summing means for summing the output from said squaring means and for generating said N-bit data, said N-Bit data are applied in parallel to a memory means comprised in a data compression means as address data, said data compression means converts said N-bit data to (M + L)-bit output data having M output bits and L output bits, wherein said M output bits respectively correspond to those of M bits in said N-bit data which are preceded by a series of K binary 0's, said M output bits having a binary 1 in the most significant bit position thereof, said L output bits represent the least significant bit position of said M output bits with respect to the least significant bit position of said N-bit data, K ranging from zero to N-M and (M + L) being smaller than N, a means for detecting a binary 1 in a predetermined one of said H higher bits for causing said memory means to generate (M + L)-bit data of maximum value, said averaging means derives said signal representing the average frequency of said power spectrum from said (M + L)-bit output data and deriving therefrom a signal representing the average speed of the patient's blood stream, a data conversion means converts said (M + L)-bit output data into significant data to be displayed, and wherein said ultrasonic bloodstream diagnostic apparatus further comprises: a digital-to-analog converter means for converting said significant data into an analog signal, and a monitor means for providing a display of the analog signal in a raster scan format and a display of said average speed.

## BRIEF DESCRIPTION OF THE DRAWINGS

The present invention will be described in further detail with reference to the accompanying drawings, in which:

Fig. 1 is a block diagram of an ultrasonic imaging apparatus according to a preferred embodiment of the present invention; and
Figs. 2A to 2D are illustrations of data bits involved in the data compression memory of Fig. 1.

## DETAILED DESCRIPTION

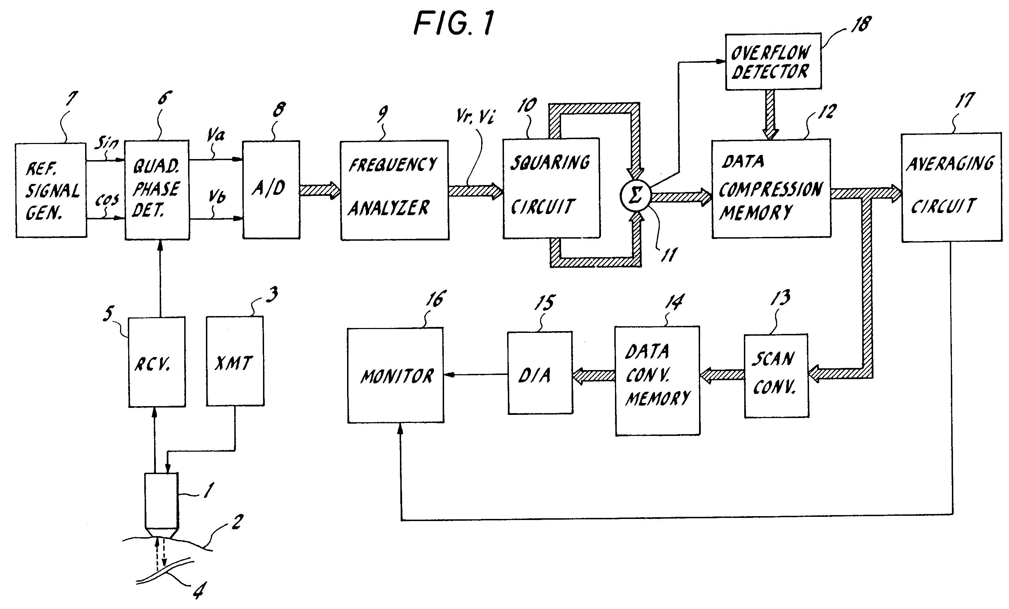

Referring now to Fig. 1, there is shown an ultrasonic bloodstream diagnostic apparatus according to the present invention. Illustrated at 1 is an ultrasonic probe placed in contact with the body of a patient 2. The probe 1 is excited by a transmit circuit 3 either in a continuous or pulsed mode to emit acoustic energy into a vessel 4 or the patient body to be examined. Acoustic energy reflecting from the vessel carries Doppler shift information representing the flow rate of the blood stream. The returning energy is detected by the same acoustic probe and sent to a quadrature phase detector 6 after amplifcation by a receive circuit 5. A reference signal generator 7 supplies reference phase quadrature signals to the phase detector 6 to generate output signals Va and Vb representing the Doppler frequency shifts. The doppler shift signals Va and Vb are supplied to an analog-to-digital converter 8, where each input signal is sampled and quantized to a 10-bit digital signal representing the flow rate of blood with a resolution of $2^{10}$. The quantized signals are interleaved with each other to produce a multiplexed signal which is applied to a frequency analyzer 9 which analyzes the signal at prescribed frequency points of the spectrum, typically 128 points, using fast Fourier transformation technique, to detect the frequency spectrum of the Doppler shift. This frequency analysis is accomplished for a period of up to several tens of milliseconds to provide real-time display of the spectrum. The results of the frequency analysis are represented by a 16-bit digital signal Vr indicating the real part of the spectrum data and a 16-bit digital signal Vi indicating the imaginary part.

The output signals Vr and Vi of the frequency analyzer 9 are multiplexed at the input of a squaring circuit 10 where each component is squared and demultiplexed from the other component. The square values of the real and imaginary components Vr and Vi are each represented by 16-bit data which are summed in an adder 11. As is known in the art, the summation of the squared real and imaginary parts generates a signal indicating the direction of blood flow at the output of the adder 11.

Since the output of the adder 11 is represented by 16-bit data as obtained by the squaring circuit 10, it is necessary to reduce the number of bits to be processed at later stages. This reduction can be achieved by removing insignificant bits and compressing the remainder into a series of significant bits. This is accomplished by a data compression circuit 12 and an overflow detector 18. In a preferred embodiment, the data compression circuit 12 comprises a read-only memory having a capacity of, typically, 32 kilobits. The higher two bits and lower two bits of the 16-bit output of adder 11 are eliminated and the intermediate 12 bits are applied as address data to the memory 12. The lower two bits in the least significant positions are quantum noise. Thus, the elimination of a total of four bits results in a series of 12 significant bits which are applied in parallel to read-only memory 12 as address data.

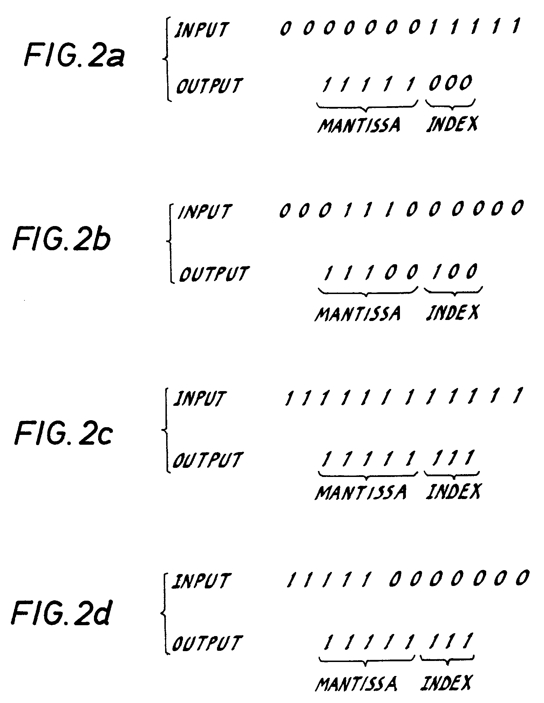

The memory 12 stores 8-bit data comprising 5-bits of "mantissa" and 3 bits of "index" which have been prepared in accordance with an algorithm shown in Figs. 2A to 2D. Each 8-bit datum is stored in a location addressable as a function of a particular value of the 12-bit input from the adder 11. The stored 8-bit datum comprises a sequence of 5 bits respectively corresponding to those of 5 bits in the 12-bit address datum which are preceded by a series of binary 0's. The 5-bit mantissa includes a binary 1 in the most significant bit position thereof and is appended by a 3-bit index which indicates the floating point of the mantissa which in turn corresponds to the least significant bit position of the mantissa with respect to the least significant bit position of the 12-bit address data structure.

The data compression algorithm will be best understood by the following description given with reference to Figs. 2a to 2d. Assume that a 12-bit datum from adder 11 is "000000011111" as shown at Fig. 2a, an 8-bit output datum "11111000" is read out of the memory 12. The higher 5 bits indicates a mantissa corresponding to the lower 5 binary 1's of the 12-bit input and the lower 3 bits indicates an index representing the floating point, or least significant bit position of the higher 5 bits with respect to the significant bit position of the input address data. In Fig. 2a, the least significant bit of the 5-bit mantissa corresponds to the least significant position of the 12-bit data and thus the floating point of the mantissa is at the zero-th decimal place in the floating point notation and is represented by a 3-bit datum "000". Likewise, a 12-bit input "000111000000", as shown in Fig. 2b, addresses a memory location storing an 8-bit output datum "11100100", wherein the higher 5 bits "11100" indicates a mantissa and lower 3 bits "100" represents the fourth decimal place.

Therefore, an 8-bit output datum of the same value "11111111" will be generated for a set of 12-bit inputs ranging from "111110000000" to "111111111111" as shown in Figs. 2c and 2d. This means that there is a maximum error of the lower seven bits "1111111". However, this error accounts for only about 3 percent of possible input bit combinations which is negligible for practical purposes.

To compensate for errors which would be introduced by the elimination of the 15-th bit position of the adder output data, an overflow detector 18 is connected to the 15-th bit position of the output of the adder 11 to detect the presence of a binary 1 in that bit position. Upon the detection of a binary 1 in the 15-th bit position, the overflow detector 18 generates a 12-bit address which causes the memory 12 to read out an 8-bit output data of the maximum value "11111111".

The output of the data compression memory 12 is fed to an averaging circuit 17, or a microprocessor, which derives an average value of Doppler shift frequencies from the power spectrum and proceeds to detect the average flow velocity V according to the following equation:

$$\Delta f = \frac{2fo \cdot V \cos \theta}{C}$$

where, $\Delta f$ is the average frequency, fo is the frequency of the acoustic energy, C is the velocity of propagation of acoustic energy within tissues, and $\theta$ represents the angle between the direction of acoustic energy and the vector of bloodstream. The average flow velocity data is displayed on a video monitor 16. Since the propagation velocity C is known as approximately 1,540 meters per second, the average flow velocity V is readily obtained by the angle $\theta$.

The compressed data is also applied to a scan converter 13 where the scan format of the ultrasonic probe 1 is converted to the raster scan format of a video monitor 16. The compressed data is reconverted to the original 12-bit data and compressed to an 8-bit format according to logarithmic algorithm for adaptation to a digital-to-analog converter 15 and monitor 16. This is accomplished by a data conversion circuit 14 which is formed by a read-only memory storing 8-bit data. The stored 8-bit data are derived from the reconversion of the 8-bit compressed data to the original 12-bit data and the logarithmic conversion of the latter to an 8-bit format. The 8-bit data are stored in locations addressible as a function of the particular value of 8-bit compressed datum. The 8-bit data read out of the memory 14 is converted to an analog signal by D/A converter 15 and displayed in a raster scan format by the monitor 16 simultaneously with the average flow rate supplied from the averaging circuit 17.

## Claims

1. A circuit for processing ultrasonic information carrying Doppler frequency shifts which indicate the flow velocity of bloodstream, comprising:

   a frequency analyzer for analyzing the frequencies of said received information,

a power spectrum deriving means for deriving from the output of said frequency analyzer N-bit data representing the power spectrum of said Doppler frequency shifts, and

an averaging means for deriving a signal representing the average frequency of said power spectrum, wherein

said power spectrum deriving means derives said N-bit data by eliminating H higher bits and J lower bits from the output of said frequency analyzer,

said N-Bit data are applied in parallel to a memory means comprised in a data compression means as address data,

said data compression means converts said N-bit data to (M + L)-bit output data having M output bits and L output bits, wherein said M output bits respectively correspond to those of M bits in said N-bit data which are preceded by a series of K binary 0's, said M output bits having a binary 1 in the most significant bit position thereof, said L output bits represent the least significant bit position of said M output bits with respect to the least significant bit position of said N-bit data, K ranging from zero to N-M and (M + L) being smaller than N,

a means for detecting a binary 1 in a predetermined one of said H higher bits for causing said memory means to generate (M + L)-bit data of maximum value,

said averaging means derives said signal representing the average frequency of said power spectrum from said (M + L)-bit output data, and

a data conversion means converts said (M + L)-bit output data into significant data to be displayed.

2. A circuit according to claim 1, **characterized in that** said power spectrum deriving means comprises a squaring means for squaring the output of said frequency analyzer, the squared value of the analyzer output being represented by N' bits which include said N-bit data plus said insignificant H higher bits in positions higher than said N-bit data and said insignificant L lower bits in positions lower than said N-bit data.

3. A circuit according to claim 2, **characterized in that** said power spectrum deriving means comprises a summing means for summing the output from said squaring means and for generating said N-bit data.

4. An ultrasonic bloodstream diagnostic apparatus comprising:

an ultrasonic probe for examining a patient's blood stream,

a transmit/receive circuit means for exciting said probe to transmit ultrasonic energy from said probe into the patient body and receiving ultrasonic signals returning from tissues of said patient,

a quadrature phase detector means for deriving phase quadrature signals from said received ultrasonic signals,

an analog-to-digital converter means for digitizing said phase quadrature signals,

a frequency analyzer for analyzing the frequencies of said received information,

a power spectrum deriving means for deriving from the output of said frequency analyzer N-bit data representing the power spectrum of said Doppler frequency shifts, and

an averaging means for deriving a signal representing the average frequency of said power spectrum, wherein

said power spectrum deriving means derives said N-bit data by eliminating H higher bits and J lower bits from the output of said frequency analyzer with a squaring means for squaring the output of said frequency analyzer, the squared value of the analyzer output being represented by N' bits which include said N-bit data plus said insignificant H higher bits in positions higher than said N-bit data and said insignificant L lower bits in positions lower than said N-bit data and with a summing means for summing the output from said squaring means and for generating said N-bit data,

said N-Bit data are applied in parallel to a memory means comprised in a data compression means as address data,

said data compression means converts said N-bit data to (M + L)-bit output data having M output bits and L output bits, wherein said M output bits respectively correspond to those of M bits in said N-bit data which are preceded by a series of K binary 0's, said M output bits having a binary 1 in the most significant bit position thereof, said L output bits represent the least significant bit position of said M output bits with respect to the least significant bit position of said N-bit data, K ranging from zero to N-M and (M + L) being smaller than N,

a means for detecting a binary 1 in a predetermined one of said H higher bits for causing said memory means to generate (M + L)-bit data of maximum value,

said averaging means derives said signal representing the average frequency of said power spectrum from said (M + L)-bit output data and deriving therefrom a signal representing the average speed of the patient's blood stream,

a data conversion means converts said (M + L)-bit output data into significant data to be displayed, and

wherein said ultrasonic bloodstream diagnostic apparatus further comprises:

a digital-to-analog converter means for converting said significant data into an analog signal, and

a monitor means for providing a display of the analog signal in a raster scan format and a display of said average speed.

5. An ultrasonic bloodstream diagnostic apparatus according to claim 4, **characterized in that** said frequency analyzer provides fast fourier transformation on digital signals.

6. An ultrasonic bloodstream diagnostic apparatus according to claim 4, **characterized in that** said data conversion means comprises a second memory means for storing data which correspond to a replica of said N-bit data which would be derived in correspondence to said (M + L)-bit output data, said replica being converted to the last-mentioned stored data according to a logarithmic function, the data in said second memory means being stored at locations which can be addressed as a function of said N-bit data.

7. A circuit according to claim 1, **characterized in that** said data conversion means comprises a second memory means for storing data which correspond to a replica of said N-bit data which would be derived in correspondence to said (M + L)-bit output data, said replica being converted to the last-mentioned stored data according to a logarithmic function, the data in said second memory means being stored at locations which can be addressed as a function of said N-bit data.

**Patentansprüche**

1. Schaltung zum Verarbeiten von Ultraschallinformationen,

die Dopplerfrequenzverschiebungen enthalten, welche die Strömungsgeschwindigkeit eines Blutstromes anzeigen, mit einem Frequenzanalysator zum Analysieren der Frequenz der aufgenommenen Informationen,

einer Leistungsspektrum-Ableiteinrichtung, die aus dem Ausgangssignal des Frequenzanalysators N-Bit-Daten herleitet, welche das Leistungsspektrum der Dopplerfrequenzverschiebungen darstellen, und

einer Mittelungseinrichtung zum Ableiten eines die mittlere Frequenz des Leistungsspektrums darstellenden Signals, wobei die Leistungsspektrum-Ableiteinrichtung die N-Bit-Daten durch Ausscheiden von H höheren Bits und J niedrigeren Bits aus dem Ausgangssignal des Frequenzanalysators herleitet,

die N-Bit-Daten als Adressendaten parallel an eine in einer Datenkomprimiereinrichtung enthaltenen Speichereinrichtung angelegt werden,

die Datenkomprimiereinrichtung die N-Bit-Daten in (M + L)-Bit-Ausgabedaten mit M Ausgabebits und L Ausgabebits umsetzt, von denen die M Ausgabebits jeweils denjenigen M Bits in den N-Bit-Daten entsprechen, die einer Folge von K Binärpegeln Null vorangehen, und die M Ausgabebits an der werthöchsten Bitstelle derselben einen Binärpegel 1 haben und die L Ausgabebits die wertniedrigste Bitstelle der M Ausgabebits in bezug auf die wertniedrigste Bitstelle der N-Bit-Daten darstellen, wobei K im Bereich von Null bis N-M liegt und (M + L) kleiner als N ist,

eine Einrichtung einen Binärpegel 1 in einem vorbestimmten Bit der H höheren Bits erfaßt, um zu bewirken, daß die Speichereinrichtung die (M + L)-Bit-Daten mit dem höchsten Wert erzeugt,

die Mittelungseinrichtung das die mittlere Frequenz des Leistungsspektrums darstellende Signal aus den (M + L)-Bit-Ausgabedaten ableitet und

eine Datenumsetzeinrichtung die (M + L)-Bit-Ausgabedaten in anzuzeigende gültige Daten umsetzt.

2. Schaltung nach Anspruch 1, dadurch gekennzeichnet, daß die Leistungsspektrum-Ableiteinrichtung eine Quadriereinrichtung für das Quadrieren des Ausgangssignals des Frequenzanalysators aufweist, wobei der quadrierte Wert des Analysatorausgangssignals durch N' Bits dargestellt ist, welche den N-Bit-Datenwert zuzüglich bedeutungsloser H höherer Bits in Stellen über dem N-Bit-Datenwert und bedeutungsloser L niedrigerer Bits in Stellen unterhalb des N-Bit-Datenwerts enthalten.

3. Schaltung nach Anspruch 2, dadurch gekennzeichnet, daß die Leistungsspektrum-Ableiteinrichtung eine Summiereinrichtung zum Aufsummieren des Ausgangssignals aus der Quadriereinrichtung und zum Erzeugen des N-Bit-Datenwerts aufweist.

4. Ultraschall-Blutströmungsdiagnosegerät, das eine Ultraschallsonde für das Untersuchen einer Blutströmung eines Patienten, eine Sende/Empfangsschaltungseinrichtung für das Anregen der Sonde zum Aussenden von Ultraschallenergie aus der Sonde in den Körper des Patienten und zum Empfangen von aus dem Körpergewebe des Patienten zurückkehrenden Ultraschallsignalen,

eine 90°-Phasendetektoreinrichtung zum Ableiten von um 90° phasenverschobenen Signalen aus den empfangenen Ultraschallsignalen,

eine Analog/Digital-Umsetzeinrichtung zum Digitalisieren der um 90° phasenverschobenen Signale,

einen Frequenzanalysator zum Analysieren der Frequenzen der empfangenen Informationen,

eine Leistungsspektrum-Ableiteinrichtung, die aus dem Ausgangssignal des Frequenzanalysators N-Bit-Daten her leitet, welche das Leistungsspektrum von Dopplerfrequenzverschiebungen darstellen, und

eine Mittelungseinrichtung zum Ableiten eines Signals aufweist, das die mittlere Frequenz des Leistungsspektrums darstellt, wobei

die Leistungsspektrum-Ableiteinrichtung die N-Bit-Daten durch Ausscheiden von H höheren Bits und J niedrigeren Bits aus dem Ausgangssignal des Frequenzanalysators mit einer Quadriereinrichtung zum Quadrieren des Ausgangssignals des Frequenzanalysators herleitet, wobei der quadrierte Wert des Analysatorausgangssignals durch N' Bits dargestellt ist, die den N-Bit-Datenwert zuzüglich bedeutungsloser H höherer Bits an Stellen über dem N-Bit-Datenwert und bedeutungsloser L niedrigerer Bits an Stellen unterhalb des N-Bit-Datenwerts darstellen, und mit einer Summiereinrichtung zum Summieren des Ausgangssignals aus der Quadriereinrichtung und zum Erzeugen des N-Bit-Datenwerts herleitet,

der N-Bit-Datenwert als Adressendatenwert parallel an eine in einer Datenkomprimiereinrichtung enthaltene Speichereinrichtung angelegt wird,

die Datenkomprimiereinrichtung die N-Bit-Daten in (M + L)-Bit-Ausgabedaten mit M Ausgabebits und L Ausgabebits umsetzt, von denen die M Ausgabebits jeweils denjenigen M Bits in den N-Bit-Daten entsprechen, die einer Folge von K Binärpegeln Null vorangehen, und die M Ausgabebits an ihrer werthöchsten Bitstelle derselben einen Binärwert 1 haben und die L Ausgabebits die wertniedrigste Bitstelle der M Ausgabebits in bezug auf die wertniedrigste Bitstelle der N-Bit-Daten darstellen, wobei K im Bereich von Null bis N-M liegt und (M + L) kleiner als N ist,

eine Einrichtung einen Binärwert 1 in einem vorbestimmten Bit der H höheren Bits erfaßt, um zu bewirken, daß die Speichereinrichtung die (M + L)-Bit-Daten mit maximalem Wert erzeugt,

die Mittelungseinrichtung das die mittlere Frequenz des Leistungsspektrums darstellende Signal aus den (M + L)-Bit-Ausgabedaten herleitet und hieraus ein Signal ableitet, das die mittlere Geschwindigkeit der Blutströmung des Patienten darstellt und

eine Datenumsetzeinrichtung die (M + L)-Bit-Ausgabedaten in anzuzeigende bedeutsame Daten umsetzt und wobei das Ultraschall-Blutstromdiagnosgerät ferner eine Digital/Analog-Umsetzeinrichtung zum Umsetzen der bedeutsamen Daten in ein analoges Signal und eine Kontrollbildschirmvorrichtung zur Anzeige des analogen Signals in einem Rasterabtastformat und zur Anzeige der mittleren Geschwindigkeit aufweist.

5. Ultraschall-Blutstromdiagnosegerät nach Anspruch 4, dadurch gekennzeichnet, daß der Frequenzanalysator eine schnelle Fouriertransformation an digitalen Signalen ausführt.

6. Ultraschall-Blutstromdiagnosegerät nach Anspruch 4, dadurch gekennzeichnet, daß die Datenumsetzeinrichtung eine zweite Speichereinrichtung zum Speichern von Daten enthält, die einer Nachbildung der N-Bit-Daten entsprechen, welche in Übereinstimmung mit den (M + L)-Bit-Ausgabedaten abgeleitet wurden, wobei die Nachbildung entsprechend einer logarithmischen Funktion in die letzteren Speicherdaten umgesetzt wird und die Daten in der zweiten Speichereinrichtung an Stellen gespeichert werden, die als Funktion der N-Bit-Daten adressiert werden können.

7. Schaltung nach Anspruch 1, dadurch gekennzeichnet, daß die Datenumsetzeinrichtung eine zweite Speichereinrichtung zum Speichern von Daten enthält, die einer Nachbildung der N-Bit-Daten entsprechen, welche in Übereinstimmung mit den (M + L)-Bit-Ausgabedaten abgeleitet würden, wobei die Nachbildung entsprechend einer logarithmischen Funktion in die letzteren Speicherdaten umgesetzt wird und die Daten in der zweiten Speichereinrichtung an Stellen gespeichert werden, die als Funktion der N-Bit-Daten adressiert werden können.

**Revendications**

1. Circuit pour traiter des informations ultrasoniques transportant des variations de fréquence Doppler qui indiquent la vitesse d'écoulement d'un courant de sang, comprenant :

un analyseur de fréquence pour analyser les fréquences desdites informations reçues,

un moyen de formation de spectre d'énergie pour former à partir du signal de sortie dudit analyseur de fréquence des données à N bits représentant le spectre d'énergie desdites variations de fréquence Doppler, et

un moyen de calcul de moyenne pour former un signal représentant la fréquence moyenne dudit spectre d'énergie, circuit dans lequel :

ledit moyen de formation de spectre d'énergie forme, à partir du signal de sortie dudit analyseur de fréquence, lesdites données à N bits en éliminant H bits de poids plus fort et J bits de poids plus faible,

lesdites données à N bits sont appliquées en parallèle, en tant que données d'adresse, à un moyen de mémorisation compris dans un moyen de compression de données,

ledit moyen de compression de données convertit les données à N bits en données de sortie à (M + L) bits comportant M bits de sortie et L bits de sortie, lesdits M bits de sortie correspondant respectivement à ceux des M bits desdites données à N bits qui sont précédés par un série de K 0 binaires, lesdits M bits de sortie comportant un 1 binaire dans sa position de bit le plus significatif, lesdits L bits de sortie représentant la position de bit le moins significatif desdits M bits de sortie par rapport à la position de bit le moins significatif desdites données à N bits, K étant compris entre 0 et N-M et (M + L) étant plus petit que N,

un moyen pour détecter un 1 binaire dans un bit prédéterminé desdits H bits de poids plus fort pour amener ledit moyen de mémorisation à engendrer des données à (M + L) bits de valeur maximale,

ledit moyen de calcul de moyenne forme, à partir desdites données de sortie à (M + L) bits, ledit signal représentant la fréquence moyenne du spectre d'énergie, et

un moyen de conversion de données convertit lesdites données de sortie à (M + L) bits en données significatives devant être affichées.

2. Circuit selon la revendication 1, caractérisé en ce que ledit moyen de formation de spectre d'énergie comprend un moyen d'élévation au carré pour élever au carré le signal de sortie dudit analyseur de fréquence, la valeur élevée au carré du signal de sortie de l'analyseur étant représentée par N' bits qui comprennent lesdites données à N bits plus lesdits H bits de poids plus fort non significatifs dans des positions de poids plus fort que lesdites données à N bits et lesdits N bits de poids plus faible non significatifs dans des positions de poids plus faible que lesdites données à N bits.

3. Circuit selon la revendication 2, caractérisé en ce que ledit moyen de formation de spectre d'énergie comprend un moyen de sommation pour faire la somme du signal de sortie provenant du moyen d'élévation au carré et pour engendrer lesdites données à N bits.

4. Appareil de diagnostic ultrasonique pour un courant de sang, comprenant :

une sonde ultrasonique pour examiner le courant de sang d'un patient,

un circuit émetteur/récepteur pour exciter ladite sonde de manière qu'une énergie ultrasonique soit émise depuis ladite sonde dans le corps du patient et pour recevoir les signaux ultrasoniques revenant des tissus dudit patient,

un moyen détecteur de phase en quadrature pour former, à partir desdits signaux ultrasoniques reçus, des signaux en quadrature de phase

un moyen convertisseur analogique/numérique pour numériser lesdits signaux en quadrature de phase,

un analyseur de fréquence pour analyser les fréquences desdites informations reçues,

un moyen de formation de spectre d'énergie pour former, à partir du signal de sortie dudit analyseur de fréquence, des données à N bits représentant le spectre d'énergie desdites variations de fréquence Doppler, et

un moyen de calcul de moyenne pour former un signal représentant la fréquence moyenne dudit spectre d'énergie, appareil dans lequel :

ledit moyen de formation de spectre d'énergie forme lesdites données à N bits en éliminant du signal de sortie dudit analyseur de fréquence les H bits de poids plus fort et les J bits de poids plus faible à l'aide d'un moyen d'élévation au carré pour élever au carré le signal de sortie dudit analyseur de fréquence, la valeur élevée au carré du signal de sortie de l'analyseur étant représentée par N bits qui comprennent lesdites données à N bits plus lesdits H bits de poids plus fort non significatifs dans des positions de poids plus fort que lesdites données à N bits et lesdits L bits de poids plus faible non significatifs dans des positions de poids plus faible que lesdites données à N bits et à l'aide d'un moyen de sommation pour faire la somme des signaux de sortie du moyen d'élévation au carré et pour engendrer lesdites données à N bits,

lesdites données à N bits sont appliquées en parallèle, en tant que données d'adresse, à un moyen de mémorisation compris dans un moyen de compression de données,

ledit moyen de compression de données convertit lesdites données à N bits en données de sortie à (M + L) bits comportant M bits de sortie et L bits de sortie, dans lequel lesdits M bits de sortie correspondent respectivement à ceux des M bits dans lesdites données à N bits qui sont précédées par une série de K 0 binaires, lesdits M bits de sortie comportant un 1 binaire dans leur position de bit le plus significatif, lesdits L bits de sortie représentent la position de bit le moins significatif desdits M bits de sortie par rapport à la position de bit le moins significatif desdites données à N bits, K étant compris entre zéro et N-M, et (M + l) étant plus petit que N,

un moyen pour détecter un 1 binaire dans un bit prédéterminé desdits H bits de poids plus fort pour amener ledit moyen de mémorisation à engendrer des données à (M + L) bits de valeur maximale,

ledit moyen de calcul de moyenne forme ledit signal représentant la fréquence moyenne du spectre d'énergie à partir desdites données de sortie à (M + L) bits et forme à partir de ces dernières un signal représentant la vitesse moyenne du courant de sang du patient,

un moyen de conversion de données convertit lesdites données de sortie à (M + L) bits en données significatives devant être affichées, et

ledit appareil ultrasonique de diagnostic pour courant de sang comprenant, en outre,

un moyen convertisseur numérique/analogique pour convertir lesdites données significatives en un signal analogique, et

un moyen de contrôle pour fournir un affichage du signal analogique dans un format de balayage de trame et un affichage de ladite vitesse moyenne.

5. Appareil ultrasonique de diagnostic pour courant de sang selon la revendication 4, caractérisé en ce que ledit analyseur de fréquence effectue une transformation de Fourier rapide sur les signaux numériques.

6. Appareil ultrasonique de diagnostic pour courant de sang selon la revendication 4, caractérisé en ce que ledit moyen de conversion de données comprend un second moyen de mémorisation pour mémoriser des données qui correspondent à une copie desdites données à N bits qui seraient formées en correspondance avec lesdites données de sortie à (M + L) bits, ladite copie étant convertie en données mémorisées mentionnées en dernier suivant une fonction logarithmique, les données dans ledit second moyen de mémorisation étant mémorisées à des endroits qui peuvent être adressés en fonction desdites données à N bits.

7. Circuit selon la revendication 1, caractérisé en ce que ledit moyen de conversion de données comprend un second moyen de mémorisation pour mémoriser les données qui correspondent à une copie desdites données à N bits qui seraient formées en correspondance avec lesdites données de sortie à (M + L) bits, lesdites copies étant converties en données mémorisées mentionnées en dernier suivant une fonction logarithmique, les données dans ledit second moyen de mémorisation étant mémorisées à des endroits qui peuvent être adressés en fonction desdites données à N bits.

FIG. 1

EP 0 189 180 B1

FIG.2a

INPUT    0 0 0 0 0 0 1 1 1 1 1

OUTPUT    1 1 1 1 1 0 0 0
          └─────┬─────┘ └─┬─┘
           MANTISSA    INDEX

FIG.2b

INPUT    0 0 0 1 1 1 0 0 0 0 0

OUTPUT    1 1 1 0 0 1 0 0
          └─────┬─────┘ └─┬─┘
           MANTISSA    INDEX

FIG.2c

INPUT    1 1 1 1 1 1 1 1 1 1 1

OUTPUT    1 1 1 1 1 1 1 1
          └─────┬─────┘ └─┬─┘
           MANTISSA    INDEX

FIG.2d

INPUT    1 1 1 1 1 0 0 0 0 0 0

OUTPUT    1 1 1 1 1 1 1 1
          └─────┬─────┘ └─┬─┘
           MANTISSA    INDEX